# EUROPÄISCHE PATENTANMELDUNG

(11) **EP 0 724 982 A2**
(43) Veröffentlichungstag der Anmeldung: **07.08.1996**
(21) Anmeldenummer: 96100866.1
(22) Anmeldetag: 23.01.1996
(51) Int. Cl.: B60R 11/02, B60K 37/02

(54) **Kraftfahrzeug mit einer Einrichtung zum Aufbewahren von Geräten**

(30) Priorität: 02.02.1995 DE 29501614 U
(71) Anmelder: VDO Adolf Schindling AG, D-60326 Frankfurt/Main (DE)
(72) Erfinder: Bartholomäi, Gunther, D-78052 Villingen-Schwenningen (DE)

(57) **Zusammenfassung**

Es wird vorgeschlagen, in einem Fahrerhaus insbesondere im Greif- und Betätigungsbereich des Fahrers, eine oder mehrere verriegelbare Klappen (29) vorzusehen, mit denen Aufbewahrungsräume für Geräte, (30, 31, 32, 33), die nicht unmittelbar dem Fahren dienen, abdeckbar sind.

Die Geräte sind (30, 31, 32, 33) der Innenseite einer solchen Klappe (29) derart zugeordnet, daß sie sich bei aufgeschwenkter Klappe (29) in einer Betätigungs- und/oder Ableseposition befinden.

## Beschreibung

Die Erfindung betrifft ein Kraftfahrzeug mit einer Einrichtung zum Aufbewahren von Geräten, die vom Fahrer während des Fahrens nicht benutzt bzw. beobachtet werden sich aber im Greifbereich des Fahrers befinden sollen.

Zur Ausrüstung eines modernen Fahrerarbeitsplatzes im Nutzfahrzeug zählen abgesehen von den zur Erfüllung der Fahraufgabe erforderlichen Instrumenten solche Geräte, die bezüglich der logistischen Abwicklung von Transportaufträgen Verbesserungen gleichzeitig aber auch Erleichterungen bieten, wenn man beispielsweise an die lästige "Lenkradbuchhaltung" denkt. Zu derartigen Geräten zählen Funktelefone, Barcodeleser, Belegdrucker, Geräte zur Aufnahme auswechselbarer, vorzugsweise für Betriebsdaten vorgesehene Datenspeicher sowie für Handeingabe geeignete Geräte zur Erfassung organisatorischer Daten im Zusammenhang mit Transport- und Verteileraufträgen. Es handelt sich also um Geräte, die nicht zum Fahren benötigt werden dennoch aber im Greifbereich des Fahrers angeordnet sein sollen. Im diesem Bereich des Fahrerarbeitsplatzes vor allem jedoch im Sichtfeld des Fahrers während des Fahrens ist verständlicherweise bereits eine hohe Dichte an Instrumenten, Stellelementen und Signaleinrichtungen gegeben, so daß die genannten sozusagen zu einem sekundären Greifbereich zählenden Geräte in der Regel nicht optimal sondern in Lücken zwischen den etablierten Instrumenten und am Rande des Gerätebereichs des Fahrers angebracht sind. Diese in der Regel ästhetisch wenig vorteilhafte, verstreute Anordnung der Geräte hat den zusätzlichen Nachteil, daß der Fahrer versucht ist, das eine oder andere Gerät auch während der Fahrt zu benutzen, was im Hinblick auf die Fahrsicherheit unterbleiben sollte. Außerdem sind die Geräte der in einem Fahrerhaus nicht zu vermeidenden Verschmutzung ausgesetzt und fordern aufgrund ihrer vielfach unpassenden Anordnung im Fahrerhaus einen Diebstahl geradezu heraus.

Die Aufgabe der vorliegenden Erfindung ist es im Fahrzeug Maßnahmen zu treffen, um derartige Zusatzgeräte Ihrem Zweck entsprechend anordnen zu können, wobei ein Verschmutzen der Geräte weitgehend reduziert, Diebstahl erschwert und Ablenkungen des Fahrer während der Fahrt infolge einer unnötigen Instrumenten- und Geräteanhäufung vermieden sind.

Die Erfindung bietet den Vorzug, daß einer Vielzahl von Geräten des sekundären Greif- und Betätigungsbereichs ein für deren Handhabung optimaler Platz im Fahrerhaus zugeordnet und somit die Wahrnehmung vereinfacht und eine eindeutige Situation für den Zugriff gegeben ist. Bei geschlossener und gegebenenfalls abgeschlossener Klappe sind die Geräte gleichzeitig so aufbewahrt, daß Verschmutzungen verringert sind und ein Diebstahl erschwert ist.

Zweifellos wirkt sich die Erfindung, indem im Bereich des Armaturenbretts Geräte, die nicht unmittelbar dem Fahren dienen, nicht in Erscheinung treten, auch dahingehend aus, daß einerseits eine Ablenkung des Fahrers durch herumliegende Geräte, die nicht während des Fahrens betätigt werden sollen, vermieden, andererseits die Priorität der dem Fahren dienende Instrumente hervorgehoben ist. Wesentlich ist ferner, daß der Fahrerarbeitsplatz aufgeräumt wirkt.

Im folgenden sei die Erfindung anhand der beigefügten Zeichnungen näher erläutert. Es zeigen:
Figur 1 eine schematische Darstellung der wichtigsten Anzeige- und Stell- bzw. Betätigungsbereiche in einem Fahrerhaus,
Figur 2 eine perspektivische Darstellung eines Ausführungsbeispiels der Erfindung.
Figur 3 eine Seitenansicht des Ausführungsbeispiels gemäß Figur 2, wobei eine Klappe geöffnet ist,
Figur 4 eine perspektivische Darstellung eines Ausführungsbeispiels mit einer Klappe, an deren Innenseite mehrere Geräte gehaltert bzw. befestigt sind.

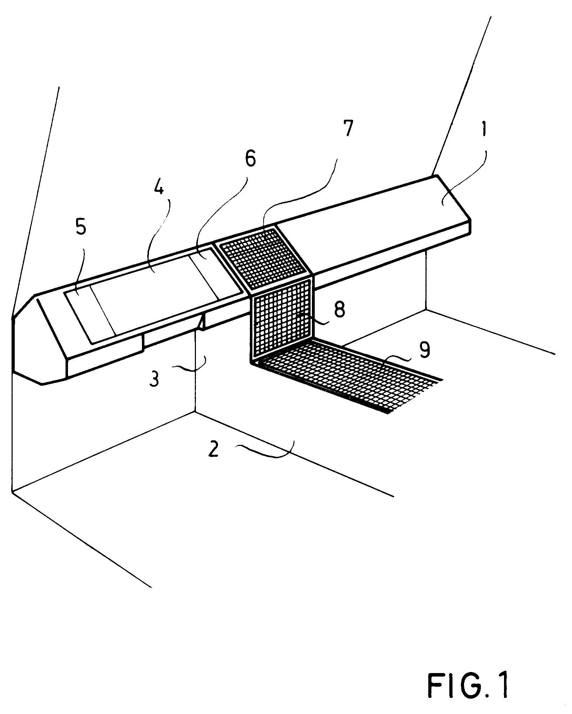

In dem mit der Figur 1 angedeuteten Fahrerhaus sind mit 1 ein Armaturenbrett, mit 2 ein Podest, mit welchem unter anderem die Kardanwelle des Fahrzeuges umbaut ist und mit 3 eine das Podest 2 mit dem Armaturenbrett 1 verbindende Säule bezeichnet.

Der zentrale Bereich 4 des Sichtfeldes des Fahrers ist üblicherweise den für das Führen des Fahrzeuges wichtigsten Instrumenten und Signalgebern vorbehalten. In Randpartien 5 und 6 des Sichtfeldes sind ebenfalls für das Fahren erforderliche Signalelemente insbesondere aber Stellmittel vorgesehen, die sich möglichst im unmittelbaren Greif- und Betätigungsbereich der während des Fahrens am Lenkrad befindlichen Hände des Fahrers angeordnet sein sollen.

Ein weiterer Bereich 7 des Armaturenbretts 1 liegt zwar im Greifbereich des Fahrers kann aber wegen des relativ großen Blicksprungs nicht mehr zum Sichtbereich gerechnet werden, so daß in dem Bereich 7 Anzeigeelemente und Stellmittel aber auch Geräte, die nicht unmittelbar zum Fahren benötigt werden, angeordnet werden können. Letzteres gilt in noch stärkerem Maße für die Bereiche 8, an der Säule 3 und 9 auf dem Podest 2. Das heißt, insbesondere die Bereiche 8 und 9 eignen sich für die Zuordnung von Zusatzgeräten der eingangs beschriebenen Art.

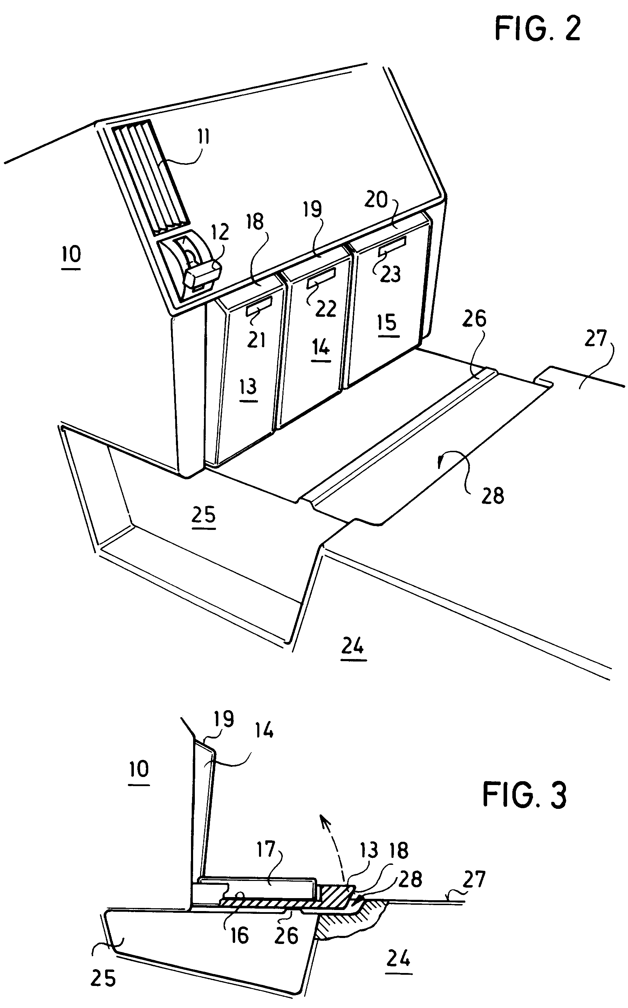

Das Ausführungsbeispiel gemäß den Figuren 2 und 3 zeigt eine aus der nicht dargestellten Armaturenbrettebene hervorspringende Mittelkonsole 10, an welcher u. a. mit Lamellenverschlüssen versehene, Lüftungsschlitze 11 sowie ein Stellelement 12 vorgesehen sind. Außerdem sind an der Mittelkonsole 10 drei Klappen 13, 14 und 15 schwenkbar gelagert, an deren Innenseite vorzugsweise in einer geeigneten Vertiefung 16 beispielsweise ein Handeingabegerät 17, ein Telefon und ein Drucker gehaltert sind. Die Gerätebezeichnungen können beispielsweise an den nach oben weisenden Klappenflächen 18, 19 und 20 angebracht werden. Mit 21, 22 und 23 sind Griffmulden bezeichnet, in die geeignete, nicht dargestellte Betätigungselemente zur Entriegelung der Klappen 13, 14, 15 hineinragen.

Bei dem Ausführungsbeispiel gemäß den Figuren 2 und 3 ist dem beispielsweise einen Unterflurmotor überbauenden Podest 24 ein den Klappen 13, 14, 15 als Auflage dienender Anbau 25 zugeordnet. Mit 26 ist ein an dem Anbau 25 ausgebildeter Steg bezeichnet, der ein exaktes Aufliegen der Klappen 13, 14, 15 ermöglicht.

Die in bezug auf die nach oben weisende Fläche 27 des Podestes 24 versenkte Lage der geöffneten Klappen 13, 14, 15 bietet eine ästhetisch ansprechende Anordnung der Geräte im Greifbereich des Fahrers. Vorzugsweise ist den Klappen 13, 14, 15 jeweils eine nicht dargestellte Kippspannvorrichtung zugeordnet, die eine Arretierung der Klappen in der geöffneten Stellung auch beim Entnehmen eines an der betreffenden Klappe gehalterten Gerätes bewirkt. Im übrigen ist, um ein Handhaben der in der geöffneten Stellung der versenkten Klappen 13, 14, 15 zu ermöglichen, zwischen dem Podest 24 und den Klappenflächen 18, 19, 20 eine ausreichende Freisparung 28 vorgesehen.

Die Klappen 13, 14 und 15 lassen sich, wie bereits erwähnt, selbstverständlich auch in den in Figur 1 mit 7 und 9 bezeichneten Greifbereichen des Fahrers anordnen wobei, falls eine Auflage, wie bei dem Ausführungsbeispiel gemäß den Figuren 2 und 3 nicht möglich ist, geeignete in der geöffneten Stellung wirksame Halter sowie beim Öffnen, je nach Lage der Klappen aber auch beim Schließen, in Funktion tretende Dämpfungsmittel vorgesehen sein sollten.

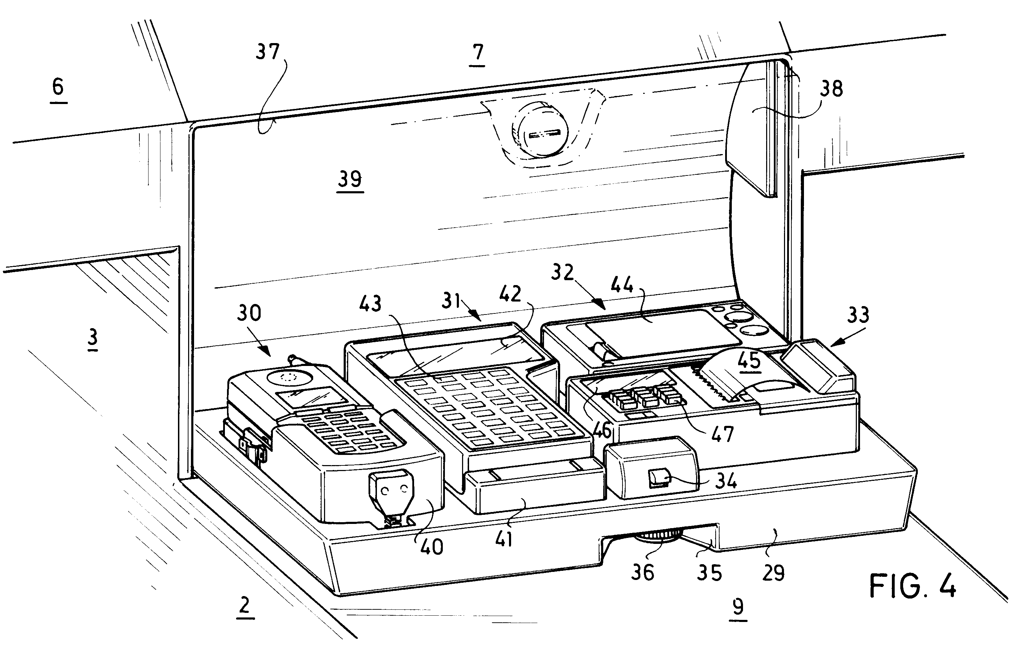

Mit der Figur 4 ist ein Ausführungsbeispiel dargestellt, bei welchem eine Klappe 29 vorgesehen ist, an welcher mehrere Geräte 30, 31, 32 und 33 gehaltert sind. Mit 34 ist ein Riegel bezeichnet, der zum Öffnen der Klappe 29 mittels eines drehbar gelagerten und innerhalb einer Griffmulde 35 versenkt angeordneten Knopfes 36 betätigt werden kann. Der Klappe 29, die beispielsweise an Stelle der Klappen 13, 14 und 15 angeordnet sein kann, sind innerhalb einer in der Säule 3 ausgebildeten, einen Geräteraum bildenden Freisparung 37 Anschläge 38 zugeordnet, die die Schließstellung der Klappe 29 vorgeben. Die Freisparung 37, mit anderen Worten der Geräteraum ist rückseitig mittels einer flexiblen Schürze 39 abgeschlossen. Zweckmäßigerweise sind der Klappe 29, die sozusagen als Geräteträger dient, geeignete, nicht dargestellte Dämpfungsmittel zugeordnet. Außerdem ist aus der Figur 4 ersichtlich, daß der Knopf 35 am Schließzylinder eines Schlosses ausgebildet ist.

Die Betätigungs- und Anzeigemittel der Geräte 30, 31, 32 und 33 liegen, was ebenfalls aus der Figur 4 ersichtlich ist, im wesentlichen in einer Ebene. Hierzu ist in der Klappe 29 ein unterschiedlich tief versenkter Einbau der Geräte 30, 31, 32 und 33 erforderlich, was andererseits eine entsprechend der Höhe der Geräte 30, 31, 32 und 33 strukturierte Innenseite des Klappe 29 bedingt.

Der Vollständigkeit halber sei noch erwähnt, daß das Telefon 30 in einem an der Klappe 29 befestigten Halter 40 aufgenommen ist. Ebenso ist dem entnehmbaren Handeingabegerät 31 ein Halter 41 zugeordnet, über den das Handeingabegerät 31 mit Energie versorgt wird und wesentliche Betriebsdaten des Fahrzeuges in das Handeingabegerät 31 übertragbar sind. Im übrigen stellt das Handeingabegerät 31 ein mit einem Display 42 und einer Folientastatur 43 ausgerüstetes "Notizbuch" dar, mit welchem eine Fülle von insbesondere im Verteilerverkehr interessierenden Daten erfaßbar sind. Demgegenüber ist das Gerät 32, das auch als wandbündiges Einbaugerät Anwendung finden kann, mit der Klappe 29 fest verbunden. An dem Gerät 32 ist frontseitig ein als Wippe ausgebildeter Deckel 44 ausgebildet, welcher an seiner Innenseite eine Tasche zur Aufnahme eines auswechselbaren Datenspeichers aufweist. Dieser Datenspeicher kann in Verbindung mit einem Bordrechner zur Parametierung des Bordrechners sowie zur Übernahmne von vom Bordrechner ermittelten Fahrtdaten dienen. Das Gerät 33 ist ebenfalls fest mit der Klappe 29 verbunden und stellt, wie der Beleg 45 zeigt, einen Drucker dar, mit welchem Fahrzeugdaten oder Daten von Fahrzeugaggregaten, wie z. B. Kühlsystemen, auch in graphischer Form ausdruckbar sind. Dabei weist das Gerät 33 zusätzlich ein Display 46 und eine Tastatur 47 für Eingabezwecke auf.

## Patentansprüche

1. Kraftfahrzeug mit einer Einrichtung zum Aufbewahren von Geräten, die vom Fahrer während des Fahrens nicht benutzt bzw. beobachtet werden sich aber im Greifbereich des Fahrers befinden sollen
dadurch gekennzeichnet,
daß dem Armaturenbrett eine verriegelbare Klappe (13, 14, 15, 29) zugeordnet ist
und daß an der Innenseite der Klappe (13, 14, 15, 29) Mittel zur Aufnahme und Befestigung wenigstens eines Gerätes (17, 30, 31, 32, 33) ausgebildet sind derart, daß das Gerät (17, 30, 31, 32, 33) bei aufgeschwenkter Klappe (13, 14, 15, 29) sich in einer Betätigungs- und/oder Ableseposition befindet.

2. Kraftfahrzeug nach Anspruch 1,
dadurch gekennzeichnet,
daß mehrere jeweils ein Gerät (17) halternde Klappen (13, 14, 15) nebeneinander angeordnet sind.

3. Kraftfahrzeug nach Anspruch 1,
dadurch gekennzeichnet,
daß an der Klappe (29) mehrere Geräte (30, 31, 32, 33) abnehmbar und/oder fest derart angeordnet sind, daß sich die Betätigungs- und Anzeigemittel (42, 43, 44, 46, 47) der Geräte (30, 31, 32, 33) im wesentlichen in einer Ebene befinden.

4. Kraftfahrzeug nach Anspruch 1,
dadurch gekennzeichnet,
daß die Klappe (29) mit einer Bremseinrichtung versehen ist.

5. Kraftfahrzeug nach Anspruch 1,
dadurch gekennzeichnet,
daß eine als Geräteraum vorgesehene, frontseitig durch die Klappe (29) verschließbare Freisparung (37) rückseitig durch eine flexible Schürze (39) abgedeckt ist.
